# EUROPÄISCHE PATENTSCHRIFT

(11) **EP 0 849 584 B1**
(45) Veröffentlichungstag und Bekanntmachung des Hinweises auf die Patenterteilung: **31.07.2002**
(21) Anmeldenummer: 97120353.4
(22) Anmeldetag: 20.11.1997
(51) Int. Cl.: G01N 21/03, G01N 21/11

(54) **Vorrichtung (Küvette) zur Aufnahme und Speicherung von Flüssigkeiten und zur Durchführung optischer Messungen**
Apparatus (cuvette) for receiving and storing liquids and for performing optical measurements
Dispositif (cuvette) pour recevoir et stocker des liquides et pour effecteur des mesures optiques

(30) Priorität: 19.12.1996 DE 19652784
(43) Veröffentlichungstag der Anmeldung: 24.06.1998
(73) Patentinhaber: Dade Behring Marburg GmbH, 35001 Marburg (DE)
(72) Erfinder: Meller, Paul, Dr., 35041 Marburg (DE); Gross, Jürgen, Dr., 65719 Hofheim (DE)

(56) Entgegenhaltungen:
- EP-A- 0 701 865
- DE-A- 3 029 718
- DE-A- 19 535 046
- US-A- 4 420 254
- US-A- 5 260 030

## Beschreibung

Die in-vitro Diagnostik wird in zunehmendem Maße von der Automatisierung der durchzuführenden Teste und Meßverfahren geprägt. Der Hintergrund für diese Anforderung liegt einerseits an dem Wunsch des Ausschlusses individueller Faktoren in der Handhabung und Durchführung durch jegliches Bedienungspersonal und andererseits an dem mit zunehmend hohen Kosten verbundenen Personaleinsatz.

Für die Entwicklung und Durchführung proteinchemischer Meßmethoden im automatisierten Laborbetrieb werden dadurch große Anforderungen an die Kenntnis der verfahrenstechnischen Durchführung und die Qualitätssicherung gestellt.

Bei wachsenden Anforderungen an die Spezifität und Sensitivität der Teste und bei der gleichzeitigen Forderung nach höheren Durchsätzen eines Analysegerätes ist es daher notwendig, die bisherigen Konzepte der Handhabung von Flüssigkeiten zu erweitern. Für die Durchführung eines proteinchemischen Testes werden in der Regel zwei Arten von flüssigen Ausgangskomponenten benötigt: die, von dem zu untersuchenden Patienten gewonnene Probe und die für die diagnostische Aussage notwendigen Reagenzkomponenten.

Während die Probe nach der Durchführung möglicherweise notwendiger präparativer Vorbereitungsschritte (Zentrifugation, Abtrennung zellulärer Bestandteile o.ä.) nur eine Komponente darstellt, setzt sich das Reagenz häufig aus mehreren Bestandteilen zusammen.

Bei der verfahrenstechnischen Durchführung eines diagnostischen Testes müssen die Probe und die Testkomponenten häufig in einer bestimmten Reihenfolge aufgenommen werden. Bei den meisten Analysegeräten erfolgt dies durch eine Pipettiervorrichtung, die diese Schritte nacheinander oder, auch in geeigneter Weise zusammengefaßt, durchführt. Zwischen den einzelnen Testen werden die mit der Flüssigkeit in Berührung gekommenen Teile der Pipettiervorrichtung, wie die Innenund Außenseite der Nadel durch eine geeignete Reinigungslösung gewaschen, um so wieder ohne kontaminierte Anteile für die Aufnahme nachfolgender Probe oder Testflüssigkeiten zur Verfügung zu stehen. Ähnliche Verfahren werden für die Reinigung wiederverwendbarer Reaktionsgefäße durchgeführt.

Dieses oben beschriebene Verfahren eignet sich somit für einen kontinuierlichen und automatischen Betrieb, solange die Anforderungen an die Reinigungsbedingungen und die Qualität des Reinigungsverfahrens soweit übereinstimmen, daß für einen nachfolgenden Test keine Einflüsse durch die an der Oberfläche möglicherweise adsorbtiv gebundenen Bestandteile meßbar sind oder durch andere qualitätssichernde Maßnahmen des Testes ausgeschlossen werden können.

Leider haben viele der neueren diagnostischen Teste, wie die Palette der Tumormarker oder Teste der Mikrobiologie keinen fest definierten diagnostisch relevanten Meßbereich mehr. Im Falle von Tumormarkem ist es notwendig, alle über einen bestimmten Schwellwert hinausgehenden Werte zu erfassen und im Bereich der Mikrobiologie besteht die Anforderung, bis in den Bereich von wenigen Molekülen messen zu können.

Diese Anforderungen erlauben es daher häufig nicht mehr ohne zusätzliche Maßnahmen, die mit den Flüssigkeiten in Berührung gekommenen Bestandteile durch wiederholtes Waschen zu reinigen. Zusätzlich könnten Spuren, der an der Oberfläche zurückgebliebenen Bestandteile der Reinigungslösung selbst zu einer irreversiblen Verfälschung des Ergebnisses führen. Andererseits steigt mit zunehmenden Anforderungen der Verbrauch und damit der Kostenanteil an Reinigungslösung sehr stark an. Maßnahmen zur Verbesserung der Reinigung bei gleichzeitig reduziertem Verbrauch erfordern zusätzliche apparative Maßnahmen (Erhitzen der Reinigungslösung, Ultraschallquelle o.ä.)

Um alle diese Schwierigkeiten zu umgehen, werden von vielen Anbietern diagnostischer Analysesysteme daher bereits Einmalartikel für die Pipettenspitzen und für die Reaktionsgefäße angeboten. US 5,260,030 offenbart eine Vorrichtung zur Aufnahme, zum Transport und zur Speicherung von Flüssigkeiten und zur Durchführung optischer Messungen in einem Analysegerät, umfassend:
- ein aus einem lichtdurchlässigen Material bestehendes Reaktionsgefäß, das an der Oberseite einen Anschlußkonus zur Aufnahme an eine Wechselspitzeneinrichtung aufweist, und
- einen an der Unterseite des Reaktionsgefäßes angebrachten Einlaßkanal in Form eines verlängerten Röhrchens zur Aufnahme der Flüssigkeitskomponenten, wobei eine obere Öffnung des Röhrchens oberhalb des Bodens eines als Küvette ausgestalteten Teils des Reaktionsgefäßes liegt und das Röhrchen eine Pipettenspitze umfaßt.

In US 4,420,254 wird eine Küvette in Form einer üblichen Pipettenspitze mit einem Fenster für optische Messungen beschrieben.

Ein anderer Weg wird durch die Verwendung fertig konfektionierter Testmodule begangen. Dabei sind die notwendigen Bestandteile des Reagenz soweit vorbereitet, daß nur noch die Zugabe einer Probe und die Mischung der Reagenzkomponeten erfolgen muß.

Nachteil des letztgenannten Verfahrens ist die Bereitstellung der Testkomponenten für den einzelnen Test, deren Konservierung und Lagerung innerhalb und außerhalb des Analysegerätes. Diese Maßnahmen sind zumeist nur erheblich kostenintensiver zu realisieren als die Entnahme der Testflüssigkeit aus größeren Vorratsflaschen. Bei der verfahrenstechnischen Durchführung von Testen auf einem Analysegerät erfolgt der Transfer von Flüssigkeiten und die Bereitstellung von Reaktionsgefäßen in der Regel getrennt. Dabei werden die Flüssigkeiten durch an beweglichen Einheiten (X-Y-Z Transferarme) angekoppelten Dosiersystemen an den Ort der Reaktionsgefäßes transferiert, wo nach möglichen weiteren Inkubationsschritten die Messung der in dem Gefäß befindlichen Reaktionsflüssigkeit erfolgt.

Stand der Technik sind also Analysengeräte bei den sowohl Einmalartikel für die Dosierung in Form von Wechselspitzen, als auch Einmalartikel als Reaktionsgefäße eingesetzt werden, die nach Anforderung kontinuierlich einer Prozeßeinheit zugeführt werden.

Diese Verfahrensweise ermöglicht eine vollständig verschleppungsfreie Durchführung von Messungen, wobei pro Analyseergebnis mindestens eine Wechselspitze und ein Reaktionsgefäß verwendet werden müssen. Dies bewirkt einen erheblichen Verbrauchskostenanteil, der bei automatentauglichen Einmalartikeln eine Größenordnung von DM 0,05 - 0,30 pro Verbrauchsartikel aufweisen kann. Zusätzlich müssen die einzelnen Verbrauchsartikel innerhalb des Analyseautomaten prozessiert werden. Durch die Aufnahme des Wechselspitze, den Flüssigkeitstransfer und den Abwurf der benutzten Spitze einerseits, als auch durch die Zuführung von Einmal-Reaktionsgefäßen werden eine Vielzahl elektromechanischer Stelleinheiten benötigt. Die gesamte verfahrenstechnische Durchführung ist somit mit einem hohen Zeitbedarf verbunden. Dies hat direkte Auswirkungen auf die Geschwindigkeit und den Durchsatz eines Analyseautomaten.

Um daher bei den genannten Anforderungen, die beschriebenen Nachteile zu überwinden und um eine einfachere prozeßtechnische Bearbeitung durch Zusammenfassung mehrerer Verfahrensschritte zu ermöglichen und einen kostengünstigeren Materialeinsatz zu erreichen, lag der Erfindung die Aufgabe zugrunde, ein neues Reaktionsgefäß zu entwickeln, das gleichzeitig die Aufnahme von Flüssigkeiten, die Speicherung der Testkomponenten und die Durchführung von optischen Messungen erlaubt.

Erfindungsgemäß wurde die Aufgabe dahingehend gelöst, daß ein Reaktionsgefäß mit einer zusätzlichen Vorrichtung zur Aufnahme von Flüssigkeiten, welche eine aus einem für die Erkennung der Oberfläche einer Flüssigkeit geeigneten leitfähigen Material bestehende Pipettenspitze umfaßt, konstruiert wurde und gleichzeitig die Vorrichtung in gleicher Weise wie eine Wechselspitze innerhalb des Analysegeräts prozessiert werden kann.

Das Reaktionsgefäß muß, um es für optische Messungen zugänglich zu machen, aus einem lichtdurchlässigen Material, wie z.B. Polymethylmethacrylat, Polypropylen o.ä. bestehen.

Zur Aufnahme der Flüssigkeitskomponenten dient ein an der Unterseite des Reaktionsgefäßes angebrachter Einlaßkanal in Form eines verlängerten Röhrchens, das nach den Anforderungen an die Präzision der entnommenen Flüssigkeitsvolumina einen entsprechenden Durchmesser und Spitzenprofil aufweist. Um bei der Aufnahme der Flüssigkeit den Verbleib der Flüssigkeit innerhalb des Reaktionsgefäßes zu sichern, liegt die obere Öffnung der Einlaßvorrichtung oberhalb des Bodens des als Küvette ausgestaltenten Teils des Reaktionsgefäßes. Dadurch ist es durch Anlagen eines Unterdrucks in einfacher Weise möglich, Volumina aus Vorratsflaschen aufzunehmen und vollständig in die Küvette abzugeben. Gleichzeitig können eventuell verbliebene Restanteile an Flüssigkeit durch Anlegen eines Gasdruckes ausgegeben werden. Die erreichbare Präzision der Flüssigkeitsaufnahme ist vergleichbar den bei kommerziell verfügbaren Wechselspitzen erreichbaren Präzisionen und beträgt einige Prozent bei Volumina von 1-10 Mikrolitern. Weiterhin kann die Außenseite der Spitze durch konventionelle Waschstationen gespült werden.

Alle Teile das Reaktionsgefäß betreffend und die für die Durchführung optischer Messungen benötigt werden, müssen ebenfalls aus einem lichtdurchlässigen Material bestehen, um die optische Durchlässigkeit zu gewährleisten. Die Form der Reaktionsgefäßes selbst kann rund, rechteckig oder polygonal ausgeführt sein, und wird durch die produktions und verfahrenstechnischen Anforderungen bestimmt. Um eine möglichst gute Wärmeübertragung bei möglichen Inkubationsschritten zu ermöglichen, sollen die Wände möglichst glatt sein. Um die Vorrichtung für den Einsatz in optischen Verfahren anzupassen, können die Wände des Reaktionsgefäßes plan oder in geeigneter Weise gekrümmt sein, um ein entsprechendes optisches Strahlprofil zu erreichen.

Zusätzlich zu den Anforderungen an das Reaktionsgefäß muß die Vorrichtung zur Flüssigkeitsaufnahme weitere Anforderungen erfüllen: Neben den geometrischen Anforderungen an die Form und den Durchmesser der Pipettenspitze, soll das Material für die gleichzeitige Erkennung der Oberfläche einer Flüssigkeit geeignet sein. Dies kann durch die Verwendung graphithaltigen Kunststoffmaterials, das leitfähige Eigenschaften besitzt, erreicht werden. Alternativ wäre ebenfalls die Verwendung von Stahlnadeln möglich, wie sie bei vielen medizinischen Einmalartikeln Anwendung finden.

Die Oberseite des Reaktionsgefäßes besitzt eine Öffnung zur Aufnahme der Vorrichtung. Dies hat den Vorteil, daß die Vorrichtung in gleicher Weise wie eine Wechselspitze aufgenommen und verworfen werden kann und keine zusätzlichen mechanischen Stelleinheiten benötigt werden. Durch ein an die Wechselspitzeneinheit angeschlossenes Dilutorsystem ist die Zugabe weiterer Flüssigkeiten, wie z. Bsp. eines Puffers möglich.

Ausführungsbeispiele der Erfindung sind im folgenden anhand der beiliegenden Zeichnungen beschrieben. Es zeigen:
- Fig. 1: eine Seitenansicht einer erfindungsgemäßen Küvette mit mitttig integrierten Vorrichtung zur Flüssigkeitsaufnahme
- Fig. 2: eine Seitenansicht einer erfindungsgemäßen Küvette mit seitlich angebrachter Vorrichtung zur Flüssigkeitsaufnahme
als bevorzugte Ausgestaltungen einer erfindungsgemäß beschriebenen Küvette.

Die in den beiliegenden Abbildungen dargestellten Küvetten bestehen aus einem lichtdurchlässigen Kunststoff 2, z.B. aus einem Polymethylmethacrylat-Spritzguss. Die Form des Körpers 2 kann gemäß der beschriebenen Erfindung unterschiedlich geformt sein. Ebenfalls ist es möglich, daß der Körper 2 aus verschiedenen Materialien hergestellt ist. An diesen Körper ist eine Vorrichtung zur Aufnahme der Flüssigkeit 4 in Form einer Pipettenspitze oder in Form eines dünnen Rohres mittig bzw. seitlich angebracht. Das Material dieser Teils kann dabei aus einem anderen Material z.B. aus einem leitfähigen graphithaltigen Kunststoff oder Metall sein. Alternativ kann es in Teilen mit geeigneten leitfähigen Materialien beschichtet sein.

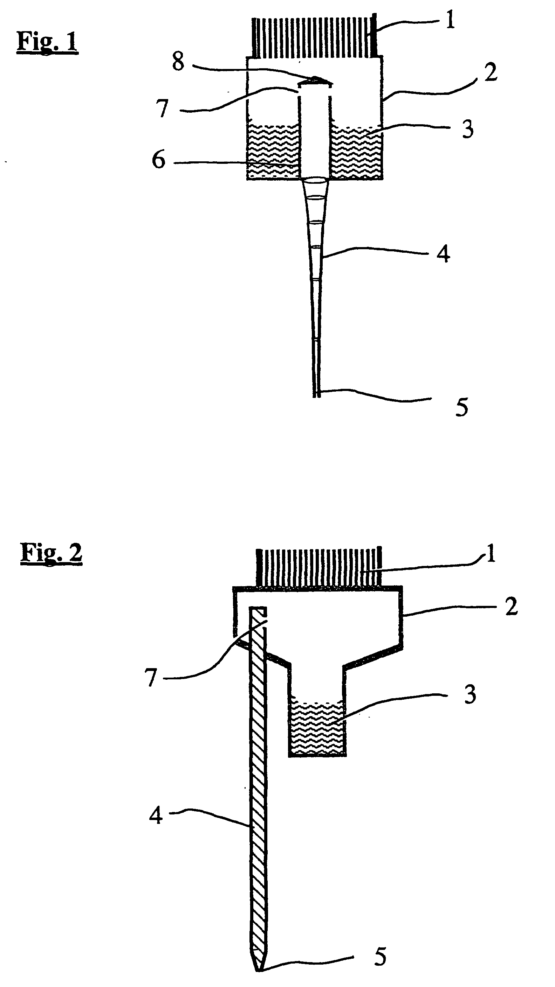

Während sich in Fig. 1 die Pipettenspitze in den lichtdurchlässigen Körper in Form eines Überlaufrohres 6 fortsetzt, ist dieser in einer anderen Ausführungsform in Fig.2 seitlich angebracht. Am jeweils oberen Ende der Füllvorrichtung 4 befindet sich eine Öffnung 7 zur Abgabe der aufgenommenen Flüssigkeit 3. Form, Randdicke und Durchmesser der Spitze (5) sind den Anforderungen der Dosierpräzision angepaßt.

Beide Ausführungsformen beinhalten eine Halterung 1, die die Aufnahme, den Transport und die Abgabe der Küvetten in gleicher Weise wie Wechselspitzen erlaubt. Zur Zugabe von Flüssigkeiten über ein angeschlossenes Dilutorsystem können die Kanäle zum Ein- und Auslaß von Flüssigkeiten durch geeignete Ausgestaltung des Überlaufrohres 8 getrennt werden.

## Patentansprüche

1. Vorrichtung zur Aufnahme, zum Transport und zur Speicherung von Flüssigkeiten und zur Durchführung optischer Messungen in einem, Analysegerät, umfassend
- ein aus einem lichtdurchlässigen Material bestehendes Reaktionsgefäß (2), das an der Oberseite einen Anschlußkonus (1) zur Aufnahme an eine Wechselspitzeneinrichtung aufweist, und
- einen an der Unterseite des Reaktionsgefäßes (2) angebrachten Einlaßkanal in Form eines verlängerten Röhrchens (4, 5, 6) zur Aufnahme der Flüssigkeitskomponenten, wobei eine obere Öffnung (7) des Röhrchens (4, 5, 6) oberhalb des Bodens eines als Küvette ausgestalteten Teils des Reaktionsgefäßes (2) liegt und das Röhrchen (4, 5, 6) eine Pipettenspitze (4) umfaßt, die aus einem für die Erkennung der Oberfläche einer Flüssigkeit geeigneten leitfähigen Material besteht.

2. Vorrichtung nach Anspruch 1, **dadurch gekennzeichnet, daß** das Reaktionsgefäß (2) die Aufnahme eines Gesamtvolumens von 50- 500 µl ermöglicht.

3. Vorrichtung gemäß Anspruch 1 oder 2, **dadurch gekennzeichnet, daß** das Reaktionsgefäß (2) rund, eckig, polygonal oder konisch gestaltet sein kann, um den unterschiedlichen Anforderungen der Volumenaufnahme oder der verfahrenstechnischen Bearbeitung nachzukommen.

4. Vorrichtung gemäß einem der Ansprüche 1-3, **dadurch gekennzeichnet, daß** die Außenseite des Reaktionsgefäßes aus einer glatten Oberfläche besteht, um eine möglichst gute Wärmeübertragung zu gewährleisten.

5. Vorrichtung gemäß einem der Ansprüche 1-4, **dadurch gekennzeichnet, daß** die Aufnahme der Flüssigkeitskomponenten durch ein angesetztes Rohr (4, 5) und ein im Inneren befindliches Überlaufrohr (6) ermöglicht wird.

6. Vorrichtung gemäß einem der Ansprüche 1-5, **dadurch gekennzeichnet, daß** die Aufnahme der Flüssigkeitskomponenten durch ein seitlich angebrachtes Rohr (4,5) ermöglicht wird.

7. Vorrichtung gemäß einem der Ansprüche 1-6, **dadurch gekennzeichnet, daß** die Aufnahme der Flüssigkeitskomponenten in das Reaktionsgefäß durch ein an das Reaktionsgefäß (2) anschließbares Dilutorsystem möglich ist.

8. Vorrichtung gemäß einem der Ansprüche 1-7, **dadurch gekennzeichnet, daß** das Reaktionsgefäß (2) eine zur Volumenaufnahme ausgeformte Pipettenspitze (4, 5) geeigneter Länge, Randdicke und Durchmesser aufweist.

9. Vorrichtung gemäß einem der Ansprüche 1-8, **dadurch gekennzeichnet, daß** das Material der Pipettenspitze (4) aus leitfähigen Kunststoff oder Metall besteht.

10. Vorrichtung gemäß einem der Ansprüche 1-9, **dadurch gekennzeichnet, daß** das Reaktionsgefäß (2) so ausgestaltet ist, daß es an ein für die Verwendung von Wechselspitzen geeignetes Dilutorsystem verbunden werden kann.

11. Vorrichtung gemäß einem der Ansprüche 1-10, **dadurch gekennzeichnet, daß** die Vorrichtung wie eine Wechselspitze prozessiert werden kann.

12. Vorrichtung gemäß einem der Ansprüche 1-11, **dadurch gekennzeichnet, daß** das Reaktionsgefäß (2) mit der angesetzten Pipettenspitze (4) aus unterschiedlichen leitfähigen oder nichtleitenden Kunstoffmaterialien, Verbundmaterialien oder Kombinationen aus Kunstoff und Metall aufgebaut ist.

13. Vorrichtung gemäß einem der Ansprüche 1-12, **dadurch gekennzeichnet, daß** die Vorrichtung mit leitfähigen Materialien ganz oder teilweise beschichtet ist.

## Claims

1. An apparatus for taking up, transporting and storing liquids and for carrying out optical measurements in an analyzer, comprising
- a reaction vessel (2) made of a light-transmitting material and having on the upper side a connecting cone (1) for taking up on an exchangeable tip unit, and
- an inlet channel which is attached to the underside of the reaction vessel (2) and is in the form of an extended tube (4,5,6) for taking up the liquid components, where a top opening (7) of the tube (4,5,6) is located above the base of the reaction vessel (2) part which is designed as cuvette, and the tube (4,5,6) comprises a pipette tip (4) made of a conductive material suitable for recognizing the surface of a liquid.

2. An apparatus as claimed in claim 1, wherein the reaction vessel (2) permits a total volume of 50 - 500 µl to be taken up.

3. An apparatus as claimed in claim 1 or 2, wherein the reaction vessel (2) can have a round, angular, polygonal or conical shape in order to comply with the different requirements of volume uptake or technical processing.

4. An apparatus as claimed in any one of claims 1 to 3, wherein the outside of the reaction vessel consists of a smooth surface in order to ensure maximum heat transfer.

5. An apparatus as claimed in any one of claims 1 to 4, wherein the uptake of the liquid components is made possible by an attached tube (4,5) and an overflow tube (6) located in the inside.

6. An apparatus as claimed in any one of claims 1 to 5, wherein the uptake of the liquid components is made possible by a tube (4,5) attached on the side.

7. An apparatus as claimed in any one of claims 1 to 6, wherein the liquid components can be taken up into the reaction vessel through a dilutor system which can be connected to the reaction vessel (2).

8. An apparatus as claimed in any one of claims 1 to 7, wherein the reaction vessel (2) has a pipette tip (4,5) shaped for volume uptake and of a suitable length, edge thickness and diameter.

9. An apparatus as claimed in any one of claims 1 to 8, wherein the material of the pipette tip (4) can consist of conductive plastic or metal.

10. An apparatus as claimed in any one of claims 1 to 9, wherein the reaction vessel (2) is designed so that it can be connected to a dilutor system suitable for using exchangeable tips.

11. An apparatus as claimed in any one of claims 1 to 10, wherein the apparatus can be processed like an exchangeable tip.

12. An apparatus as claimed in any one of claims 1 to 11, wherein the reaction vessel (2) with the attached pipette tip (4) is composed of different conductive or non-conducting plastic materials, composite materials or combinations of plastic and metal.

13. An apparatus as claimed in any one of claims 1 to 12, wherein the apparatus can be wholly or partly coated with conductive materials.

## Revendications

1. Dispositif d'introduction, de transport et de stockage de liquides et destiné à la réalisation de mesures optiques dans un appareil d'analyse, comprenant
- un récipient de réaction (2) en matériau transparent présentant sur la face supérieure un cône de raccordement (1) pour le montage sur un dispositif à pointes échangeables, et
- sur la face inférieure du récipient de réaction (2), un canal d'entrée en forme d'un tube capillaire prolongé (4, 5, 6) pour introduire les composants du liquide, une ouverture (7) du tube capillaire (4, 5, 6) étant située au-dessus du fond d'un élément du récipient de réaction (2) en forme de cuvette, et le tube capillaire (4, 5, 6) comprenant une pointe de pipette (4) en matériau conducteur approprié pour la reconnaissance de la surface d'un liquide.

2. Dispositif selon la revendication 1, **caractérisé en ce que** le récipient de réaction (2) permet l'introduction d'un volume total de 50 - 500 µl.

3. Dispositif selon la revendication 1 ou 2, **caractérisé en ce que** le récipient de réaction (2) peut être rond, angulaire, polygonal ou conique afin de remplir les différentes exigences relatives à l'introduction de volume ou au traitement technique.

4. Dispositif selon l'une des revendications 1 - 3, **caractérisé en ce que** la face extérieure du récipient de réaction présente une surface lisse pour assurer un bon transfert thermique.

5. Dispositif selon l'une des revendications 1 - 4, **caractérisé en ce que** l'introduction des composants du liquide est assurée à l'aide d'un tube (4, 5) rapporté et un tube de trop-plein (6) disposé à l'intérieur.

6. Dispositif selon l'une des revendications 1 - 5, **caractérisé en ce que** l'introduction des composants du liquide est assurée à l'aide d'un tube (4, 5) disposé sur le côté.

7. Dispositif selon l'une des revendications 1 - 6, **caractérisé en ce que** l'introduction des composants du liquide dans le récipient de réaction est assurée à l'aide d'un système de dilution pouvant être raccordé au récipient de réaction (2).

8. Dispositif selon l'une des revendications 1 - 7, **caractérisé en ce que** le récipient de réaction (2) présente une pointe de pipette (4, 5) configurée pour l'introduction de volumes, d'une longueur, d'une épaisseur de bordure et d'un diamètre appropriés.

9. Dispositif selon l'une des revendications 1 - 8, **caractérisé en ce que** le matériau de la pointe de pipette (4) est une matière synthétique conductrice ou un métal.

10. Dispositif selon l'une des revendications 1 - 9, **caractérisé en ce que** le récipient de réaction (2) est configuré tel qu'il peut être relié à un système de dilution approprié pour l'utilisation de pointes échangeables.

11. Dispositif selon l'une des revendications 1 - 10 **caractérisé en ce que** le dispositif peut être manipulé comme une pointe échangeable.

12. Dispositif selon l'une des revendications 1-11, **caractérisé en ce que** le récipient de réaction (2) avec la pointe de pipette (4) rapportée est constitué de différents matières synthétiques conductrices ou non, matériaux composites ou combinaisons de matière plastique et de métal conducteurs ou non.

13. Dispositif selon l'une des revendications 1 - 12, **caractérisé en ce que** le dispositif est entièrement ou partiellement revêtu de matériaux conducteurs.
